# EUROPEAN PATENT SPECIFICATION

(11) **EP 0 662 402 B1**
(45) Date of publication and mention of the grant of the patent: **11.03.1998**
(21) Application number: 94120782.1
(22) Date of filing: 27.12.1994
(51) Int. Cl.: B60K 23/04

(54) **An electronically controlled differential with a system for controlling torque distribution**
Elektronisch gesteuertes Differentialgetriebe mit System zur Kontrolle der Abtriebsmomentverteilung
Différentiel commandé électroniquement avec système de contrôle pour la répartition du couple

(30) Priority: 29.12.1993 IT TO931007
(43) Date of publication of application: 12.07.1995
(73) Proprietor: CENTRO RICERCHE FIAT Società Consortile per Azioni, I-10043 Orbassano (Torino) (IT)
(72) Inventor: Caenazzo, Dario, I-10060 Scalenghe (TO) (IT); Mesiti, Domenico, I-10040 Leini' (TO) (IT)
(74) Representative: Di Francesco, Gianni

(56) References cited:
- EP-A- 0 546 733
- EP-A- 0 548 853
- EP-A- 0 575 151
- DE-A- 4 017 454
- GB-A- 2 213 443
- GB-A- 2 217 277
- GB-A- 2 234 030

## Description

### Background of the invention.

The present invention relates generally to an electronically controlled differential for automobiles, and particularly to a differential provided with a system for controlling torque distribution to the driving wheels on the same axle.

More particularly, the present invention refers to a system comprising a pair of axle shafts adapted to be connected for rotation to the driving wheels of a vehicle, a propeller shaft for transmitting torque from the engine to a differential which distributes rotary motion from the propeller shaft to said axle shafts.

With the aforesaid system, and generally all systems including a conventional kind of differential, torque is equally distributed to both axle shafts regardless of operation conditions. It is not possible to intervene to vary this ratio.

Also the so called self-locking differentials do not have the possibility of intervening in every condition, but only upon detecting a difference of speed between the two driving wheels. In this case, more torque is transmitted to the slower wheel.

In order to improve the driving of the vehicle, as it approaches a bend and while it is running along the bend, it would be desirable, especially with four wheel drive cars, to have the possibility of varying torque distribution to the rear driving wheels at will.

In substance, by adequately varying the torque percentage delivered to the inner and outer wheel in a bend, it would be possible to reduce side-skidding as the vehicle begins the bend. At the same time it would be possible to increase the speed along the bend as a result of the improved torque distribution between the two wheels in normal operation conditions. A differential with such a system, which however is an heavy overall system, is already known from EP-A-0 575 151.

### Summary of the invention.

In order to avoid the above cited drawbacks, it is an object of the present invention to provide a differential for automobiles, particularly four-wheel drive cars, having a system for varying and controlling on the instant torque distribution between the wheels of a same axle.

In accordance with one aspect of the invention as claimed, this object is accomplished by the provision of an automobile differential, particularly for four wheel drive vehicles, as claimed in claim 1.

### Brief description of the drawings.

Further characteristics and advantages of a preferred but not limiting embodiment of the differential according to the invention are described hereinafter with reference to the accompanying drawings, in which:
- FIG. 1: is a schematic view of a preferred embodiment of a differential according to the present invention;

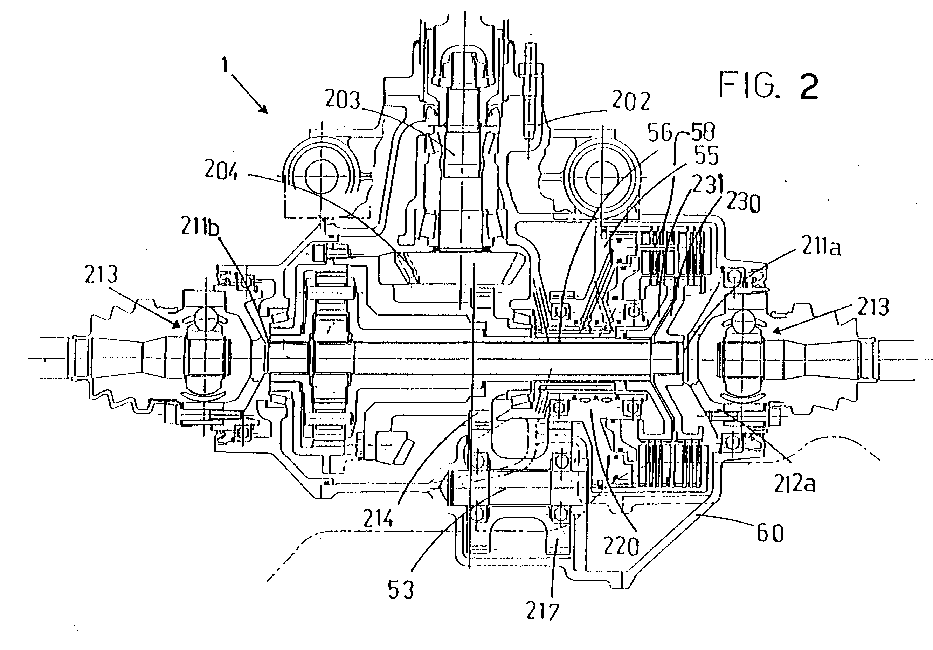

- FIG. 2: is a partial sectional view of the embodiment of FIG. 1;

### Detailed description of preferred embodiments.

With reference to the drawings, numeral 1 designates a differential fitted with the system according to the present invention. Numeral 202 designates a housing accommodating an input shaft 203 transmitting torque from the engine (not shown) to a crown gear 205 of a differential 50 of epicyclic kind through bevel gears 204.

Two axle shafts 210 and 211 are driven by differential 50. Axle shafts 210, 211 have outer end portions 211a, 211b carrying respective outer bodies 212a, 212b of constant-velocity universal joints 213 for driving the vehicle wheels 13a and 13b.

The crown gear 205, which receives motion M from shaft 203, carries cylindrical toothing 214.

Toothing 214 engages a gear 215 coupled to a gear 217. Both gears 215, 217 are rotatably supported by a shaft 53 coaxial with respect to axle shafts 210 and 211. Gear 217 drives an auxiliary gear 220 also coaxial to axle shaft 210, which is integral with a clutch bell member 55.

Bell member 55 carries the driving discs 226 of two clutches 224, 225 normally released, the driven discs 227 of which are fitted on two drums 230, 231, one 230 force fitted directly to axle shaft 210, the other 231 being force fitted to a hollow shaft 56 coaxial to said axle shaft 210 and integral with spider 57 of differential 50. Spider 57 is in turn connected to the other axle shaft 211.

Clutch assembly 224, 225 is located in a housing 60 disposed on the outside of housing 202 on the opposite side of differential 50. Rams 234, 235 hydraulically operated for controlling the clutches, are fitted within bell member 55.

The clutches that are used, may vary according to design requirements.

Operation of the differential according to the present invention is described herein after.

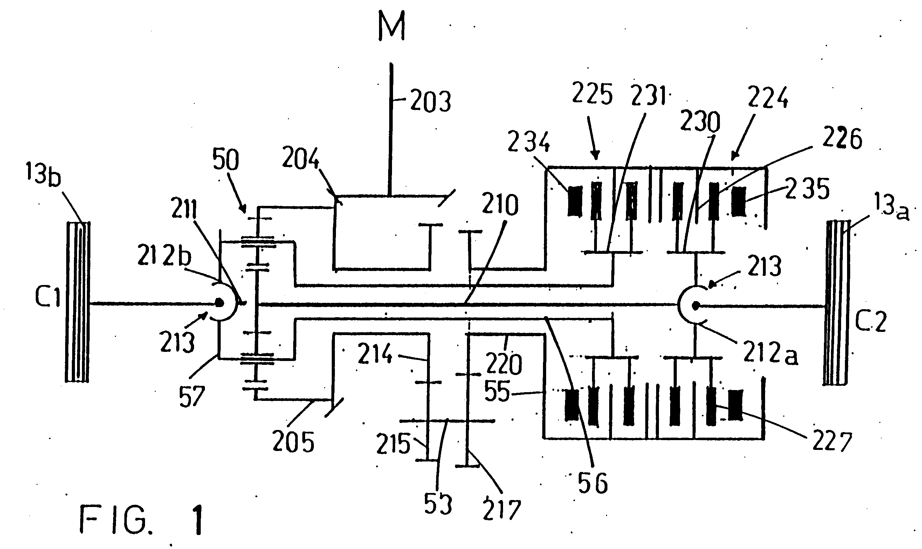

When the vehicle is running on a straight road in normal conditions, torque M from shaft 203 is distributed equally between the two axle shafts 210 and 211 of differential 50, thereby providing equal torque C1, C2 for driving wheels 13a, 13b, respectively (FIG. 1).

Auxiliary gears 215 is rotated by crown gear 205 through toothing 214. Gear 215 rotates transmission shaft 253 which in turn drives gear 217. Cylindrical gears 215, 217 are rotatably free with respect to drums 230, 231 while clutches 224 or 225 are released.

When it is desired to attain a C1 > C2 relation or vice versa, i.e. gain more torque on one of the two axle shafts and thereby the relevant wheel, it is sufficient to bring the discs of the corresponding clutch in an operation position by means of hydraulic rams 234 or 235 controlled by a processing unit.

As apparent, this is owing to the fact that the ratio between the crown gear 205 and gears 220, through gear 215 and gears 217, is calculated so that the revs of auxiliary gears 220 and bell shaped members 55, connected thereto are always greater, even just slightly, of the revs of drums 230, 231 and the relevant axle shafts coupled thereto, for any operation condition of the differential.

In other words, there is attained a transfer or "redistribution" of torques C1 and C2 transmitted to the single wheels 13a, 13b, with little loss due to dispersion caused by the clutches.

For this purpose, in order to cut down dissipated power as much as possible, the gear ratio between crown gear 205 and auxiliary gears 220, is kept to the lowest possible value. However, this value will have to be expressly calculated for each kind of vehicle equipped with the differential according to the invention.

Therefore, by actuating clutch 224 a part of torque M is transferred, through the elements of the clutch being operated, from crown gear 205 to axle shaft 210 by means of toothing 214 and gears 215, 217 and 220. In the case of clutch 225, there is the difference of the hollow shaft 56 and spider 57 being interposed.

## Claims

1. An automobile differential, particularly for four wheel drive vehicles, provided with a system for varying and controlling continuously torque distribution between the wheels of a same axle, of the type comprising an input shaft (203) being adapted for transmitting torque (M) to said axle shafts (210, 211) through a differential (50) provided with a crown gear (205) rotatably coupled to said input shaft (203), where in order to transmit part of the torque, there are provided in series between said crown gear (205) and the end portions of said axle shafts (210, 211) external to the differential (50),:
a) gearing-up means (215, 217, 220) in driving connection to the crown gear (205), with an auxiliary gear (220) always rotating at a higher speed of said crown (205);
b) one clutch (224,225) for each axle shaft (210,211) having bell members (55) with driving discs (226) and drums (230,231) with driven discs 227 for coupling for rotation, said clutches being adapted for transmitting torque from said crown gear to said axle shafts;
c) control means (234, 235) for varying the condition of said cluches (224,225) for releasably coupling for rotation, so as to continuously control torque (M) distribution between said axle shafts (210, 211);
characterized in that one (231) of said drums with the driven discs (227) of said clutches (224,225) connects to one (211) of said two axle shafts through a hollow shaft (56) coaxial to said two axle shafts and integral with the spider (57) of the differential (50), and the other one (230) of said drums is directly connected with the other one (210) of said two axle shafts.

2. A differential as claimed in claim 1, characterized in that said bell members (55) of said cluches (224,225) are coupled for rotation with the auxiliary gear (220) of said gearing-up means.

3. A differential as claimed in claim 1, characterized in that said clutches (224,225) are located outside of the housing (202) of the differential (50).

## Patentansprüche

1. Kraftfahrzeugdifferentialgetriebe, insbesondere für Fahrzeuge mit Vierradantrieb, das mit einem System zur kontinuierlichen Veränderung und Steuerung der Drehmomentverteilung zwischen den Rädern derselben Achse jener Art versehen ist, die eine Antriebswelle (203) umfaßt, die zur Übertragung eines Drehmoments (M) an die Achswellen (210, 211) durch ein Differentialgetriebe (50) ausgebildet ist, das mit einem Zahnkranz (205) versehen ist, der drehbar an die Antriebswelle (203) gekoppelt ist, wobei zur Übertragung eines Teils des Drehmoments zwischen dem Zahnkranz (205) und den Endteilen der Achswellen (210, 211) außerhalb des Differentialgetriebes (50) in Serie folgendes vorgesehen ist:
(a) Übersetzungsmittel ins Schnelle (215, 217, 220) in antreibender Verbindung mit dem Zahnkranz (205), wobei sich ein Hilfsgetriebe (220) immer mit einer höheren Geschwindigkeit als der Zahnkranz (205) dreht;
(b) eine Kupplung (224, 225) für jede Achswelle (210, 211), die Glockenelemente (55) mit Antriebsscheiben (226) und Trommeln (230, 231) mit angetriebenen Scheiben (227) zur Kopplung zur Drehung aufweist, wobei die Kupplungen zur Drehmomentübertragung von dem Zahnkranz zu den Achswellen ausgebildet sind;
(c) Steuermittel (234, 235) zur Veränderung des Zustandes der Kupplungen (224, 225) zur lösbaren Kopplung zur Drehung, so daß die Verteilung des Drehmoments (M) zwischen den Achswellen (210, 211) kontinuierlich gesteuert wird;
dadurch gekennzeichnet, daß eine (231) der Trommeln mit den angetriebenen Scheiben (227) der Kupplungen (224, 225) durch eine Hohlwelle (56), die koaxial zu den beiden Achswellen und einstückig mit dem Kreuz (57) des Differentialgetriebes (50) ausgebildet ist, mit einer (211) der beiden Achswellen verbunden ist und die andere (230) der Trommeln direkt mit der anderen (210) der beiden Achswellen verbunden ist.

2. Differentialgetriebe nach Anspruch 1, dadurch gekennzeichnet, daß die Glockenelemente (55) der Kupplungen (224, 225) zur Drehung mit dem Hilfsgetriebe (220) der Übersetzungsmittel ins Schnelle gekoppelt sind.

3. Differentialgetriebe nach Anspruch 1, dadurch gekennzeichnet, daß die Kupplungen (224, 225) außerhalb des Gehäuses (202) des Differentialgetriebes (50) angeordnet sind.

## Revendications

1. Différentiel pour automobile, en particulier pour véhicules à quatre roues motrices, pourvu d'un système pour modifier et commander continûment la distribution du couple moteur entre les roues d'un même essieu, du type comprenant un arbre d'entrée (203) agencé pour transmettre le couple moteur (M) auxdits arbres d'essieu (210, 211) par l'intermédiaire d'un différentiel (50) pourvu d'une couronne à denture extérieure (205) couplée en rotation audit arbre d'entrée (203), dans lequel, afin de transmettre une partie du couple moteur, il est prévu en série entre ladite couronne à denture extérieure (205) et les portions d'extrémité desdits arbres d'essieu (210, 211) à l'extérieur du différentiel (50):
a) un moyen de multiplication par engrenage (215, 217, 220), en liaison de transmission avec la couronne à denture extérieure (205), avec un engrenage auxiliaire (220) en rotation permanente à une vitesse supérieure à celle de ladite couronne (205);
b) un embrayage (224, 225) pour chaque arbre d'essieu(210, 211) ayant des éléments en forme de cloche (55) avec des disques d'entraînement (226), et des tambours (230, 231) avec des disques entraînés (227), pour le couplage en rotation, lesdits embrayages étant prévus pour transmettre le couple moteur de ladite couronne à denture extérieure auxdits arbres d'essieu;
c) un moyen de commande (234, 235) pour modifier l'état desdits embrayages (224, 225) pour un couplage libérable en rotation, de manière à commander continûment la distribution du couple moteur (M) entre lesdits arbres d'essieu (210, 211);
caractérisé en ce que l'un (231) desdits tambours avec les disques entraînés (227) desdits embrayages (224, 225) se raccorde à l'un (211) desdits deux arbres d'essieu par l'intermédiaire d'un arbre creux (56) coaxial auxdits deux arbres d'essieu et solidaire de la roue planétaire (57) du différentiel (50), et en ce que l'autre (230) desdits tambours est directement raccordé à l'autre (210) desdits deux arbres d'essieu.

2. Différentiel selon la revendication 1, caractérisé en ce que lesdits éléments en forme de cloche (55) desdits embrayages (224, 225) sont couplés en rotation à l'engrenage auxiliaire (220) dudit moyen de multiplication par engrenage.

3. Différentiel selon la revendication 1, caractérisé en ce que lesdits embrayages (224, 225) sont disposés à l'extérieur du boîtier (202) du différentiel (50).
